Europäisches Patentamt

European Patent Office

Office européen des brevets

(19)

(11) Publication number: **0 399 089**
**A2**

# EUROPEAN PATENT APPLICATION

(12)

(21) Application number: **89111173.4**

(22) Date of filing: **20.06.89**

(51) Int. Cl.5: **B24B 15/02**

(30) Priority: **24.05.89 ES 8901766**

(43) Date of publication of application:
**28.11.90 Bulletin 90/48**

(84) Designated Contracting States:
**AT BE CH DE ES FR GB GR IT LI LU NL SE**

(71) Applicant: **Suarez Menendez, Alfredo**
**Calle Hermanos Machado, 18-1**
**E-24009 Leon(ES)**

(72) Inventor: **Suarez Menendez, Alfredo**
**Calle Hermanos Machado, 18-1**
**E-24009 Leon(ES)**

(74) Representative: **Grättinger, Günter**
**Wittelsbacherstrasse 5 Postfach 16 49**
**D-8130 Starnberg(DE)**

(54) **Vertical portable lathe.**

(57) VERTICAL PORTABLE LATHE for turning and grinding the security valve tuyere seats installed in the various equipments comprising the Power Station boiler, such as header, superheater, cold reheating and hot reheating, also applicable to security and pressure relief valve installed in all types of industries, acting on the spot, with perfection and easy maneouvrability fastness, ready installation and light weight, which may be installed in all types of security valves and pressure relief valves installed both in the main as well as in the ancillary circuits of Nuclear Power Plants, Power Stations, Petrochemical Plants, Refineries, Cellulose Industries, etc, performing these works in a few minutes.

EP 0 399 089 A2

## VERTICAL PORTABLE LATHE

The specification discussed hereinafter corresponds to a Patent of Invention regarding a VERTICAL PORTABLE LATHE for turning and grinding the security valve tuyere seats installed in the various equipments comprising the Power Station boiler, such as header, superheater, cold reheating and hot reheating.

Its application extends, as well, to the security and pressure relief valves installed in all kind of industries, of which we could mention the leading ones: Nuclear Power Plants, Power Stations, Petrochemical Plants, Refineries, Cellulose Industries, etc

The invention provided by this VERTICAL PORTABLE LATHE is to turn damaged seats of security valves and pressure relief valves, on the spot, with such a speed and such a perfectly machined work performed in a time being TWO HUNDRED TIMES shorter than if done following the traditional methods, consisting in cutting off the Security Valve and take it to a highly qualified machine shop.

Due to its easy maneouvrability, ready installation and light weight, the Turning Machine may be installed in any security valve and pressure relief valve assembled both in the main as in the ancillary circuits of the above-mentioned industries, to perform the task in a few minutes, while methods known up to know require some hours, and at time some days, to perform it at specialized machine shops, whose costs are high if compared with the low costs, in time and money, repesented by performing them with the VERTICAL PORTABLE LATHE being the subject matter of this invention.

In order to make understanding of the function, shape and physical specifications of this invention easier, this present specification has attached a faithful graphic representation of the VERTICAL PORTABLE LATHE, with no dimensions and with its actual aspect, referencing therein the most characteristic elements which will help to describe its function.

In this way, it may be seen that the VERTICAL LATHE assembly to which we are referring is installed on the flange (1) threaded onto it and attached by the screws (2) unabling any body (3) displaceament or motion.

The lathe is attached by means of screws (4) to the security valve body (5). Once it has been attached to the valve body (5), the screws (2) are undone in order to allow the assembly to move downwards until the knife (6) is close to the seat (7) to be turned. Having reached this position, the screws (2) are fastened again and with this the body (3) is fixed on the flange (1). Then the cutting knife (6) contact with the seat (7) is finished by turning the lever (8) fixing the head (9) supporting the numerical dial (10) graded in tenths of one millimeter.

Starting from this moment, when the VERTICAL LATHE is installed on the spot, turning may be made either manually by using the lever (11) or mechanically through the pneumatic motor (12).

To make the knife (6) feed in the set (13) is moved by rotating the head (9) part supporting the dial (10) clockwise which, in turn, will state the knife-holder and knife (6) assembly (13) travel value.

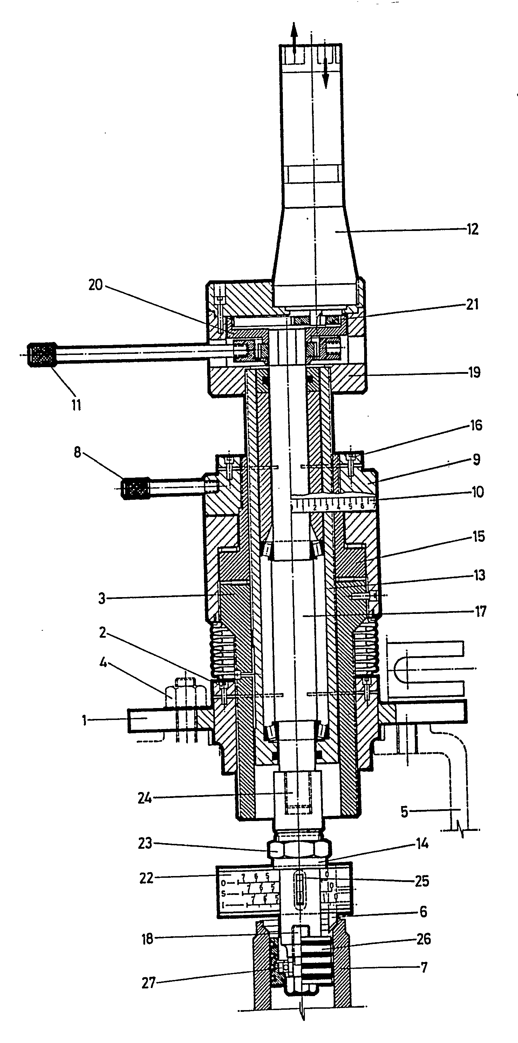

As may be seen, the VERTICAL LATHE being the subject of this invention is doubly telecopic, it may go up and down by means of the body (3) threaded on the flange (1) and by means of the assembly (13) to drive the body (9) which makes the nut (15) threaded on the inner assembly (13) turn. As may be seen in the attached drawing, the head (9) is threaded on the nut (15) and attached thereto by means of the screws (16) which forces the assembly (13) comprising the main shaft (17) the knife-holder (14) and the guide (18), as well as the head (19) and the motor (12) slide up and down.

The head (19) supports the inner-toothed crown wheel (2) which assembled on the main shaft (7) transmits to it the motor (12) motion by means of the pinion (21) of the motor shaft.

The part (22), holder of the knife (6) is fixed in the required position onto the part (14) by means of the nut (23).

The knife-holder assembly, formed by the parts (6), (14), (18), (22) and (23), may be easily substituted by another one of larger or smaller dimensions, according with the turning needs. since, as it may be seen, it is threaded onto the main shat (17) at point (24).

To make easier the co-incidence of knife (6) with the area to be turned, the knife-holder (22) has three engravings in millimeters and, therefore, it may be placed in the exact point to be turned, the diameter is measured, either in the inside as shown in the attached figure, the seat itself or the outer step. Once the diameter to which we refer has been measured, the dial reading is set in the window (25), which makes the knife (6) be placed in its exact position for turning the seat.

This work of remaking the tuyere seat in a security valve which, by using the present means implies cutting the valve if it is welded then installed, either to the boiler head or to the exit receiver of the final superheating, or at the intake and output receivers of the superheater at the Powewr Plant, would take a minimum time of fifty to sixty hours, since it is required to perform the following tasks:

1. To cut the valve off at the coupling nipple onto the header or steam receivers enumerated above.

2. To take it to a machine stop having large size lathes with a chuck capable to support the valve body to turn the tuyere seat.

3. To perfectly align the seat with the valve body axis in order to avoid remaking an offset seat which would give raise to leakages as soon as the valve be set in service, should the tuyere and the valve body geometrical axis not be perfectly aligned.

4. To turn the seat to the critical measurements given by its manufacturer.

5. To prepare the ends of the valve body nipple and the receiver or header nipple to weld them.

6. To have the welding performed by highly qualified welders.

7. To perform distensionning of weldings, as well as their quality control by means of X-ray inspection, penetrating fluids or other means duly accepted by the Pressure Containers Regulation.

As may be seen, performing steps 1 through 7 implies having avaiable highly specialized personnel, boilersmiths, pipe fitters, welders and lathe operators, as well as to use very expensive machinery such as special cutting equipment, since materials involved are of the highest quality A182-F22 and special stainless materials of the AISI-616 forged, welding machines of the highest c.c quality, machines to distension the welded area, with a minimum distension time of 18 hours between raising the temperature, maintaining it and cooling at speeds of 50 °C per hour, X-ray machines, penetrating fluids, etc.

Having the tuyere seat turning performed in the VERTICAL PORTABLE LATHE being the subject matter of this invention, the time for performing a new seat, is of thirty to fortyfive minutes, not being necessary to perform the steps 1, 2, 3, 5, 6 and 7 nor the machines and specialized personnel which implies performing this work without the VERTICAL PORTABLE LATHE being the subject matter of this invention.

Aligning of the valve body and the tuyere geometrical axis is perfect, since the guide (26) adapts itself perfectly to the tuyere (7) the seat of which will be turned.

The vertical portable lathe being the subject matter of this invention is strongly attached to the valve body by means of screws (4) and the bearing (27) which impede that the main shaft (17) has the slightest vibration, thus performing a perfect turning of the tuyere seat (7).

It is deemed that no further description is required for an expert in this field to perfectly understand the scope of this invention and the advantages it offers.

The materials, shape, size and disposition of the VERTICAL PORTABLE LATHE will be susceptible of variation, providing it does not mean any alteration of the invention essential.

The terms with which this specification has been described should be taken in their widest non limitative sense.

## Claims

1. VERTICAL PORTABLE LATHE of manual and motor drive, designed for turning and grinding the security valves and pressure relief valves tuyeres seat in all their dimensions from $\frac{1}{2}$ " through 24".

2. VERTICAL PORTABLE LATHE which may perform works on the spot on security valves at Power Plants using for turning less than fortyfive minutes including the installation of the vertical lathe, turning the valve seat and disassembly thereof.

3. VERTICAL PORTABLE LATHE for turning security valve and pressure relief valve seats, which may be extended to other turning tasks in the industry, being enough to use cutting elements in line with the requirements.